# EUROPÄISCHE PATENTANMELDUNG

(11) **EP 1 994 859 A1**
(43) Veröffentlichungstag der Anmeldung: **26.11.2008**
(21) Anmeldenummer: 08008808.1
(22) Anmeldetag: 12.05.2008
(51) Int. Cl.: A47C 23/04, A47C 27/06, F16F 1/366

(54) **Druckfeder aus einem faserverstärkten Kunststoffstrang, insbesondere zur Verwendung in einer Taschenfederkernmatratze, mit Herstellungsverfahren**

(30) Priorität: 21.05.2007 DE 102007023577
(71) Anmelder: Rummel-Matratzen GmbH & Co. KG, 91413 Neustadt a.d. Aisch (DE)
(72) Erfinder: Kutschi, Franz, 8563 Ligist (AT)
(74) Vertreter: Mielke, Klaus

(57) **Zusammenfassung**

Die Erfindung betrifft eine Druckfeder, welche besonders als Einlage in eine Taschenfederkernmatratze geeignet ist. Diese weist federartige Wickelgänge aus einem endlosen konditionierten, faserverstärkten Kunststoffstrang (2) auf, wobei der Kunststoffstrang in Kreuzungspunkten (k1-k18) der Wickelgänge (a2-a9; b2-b9; c2-c9; d2-d9) homogen verbunden ist. Die Erfindung betrifft auch Verfahren zur Herstellung einer derartigen Druckfeder. Die erfindungsgemäße Druckfeder, deren Wickelgänge aus einem endlosen konditionierten faserverstärkten Kunststoffstrang bestehen, welcher in den Kreuzungspunkten der Wickelgänge homogen miteinander verbunden ist, stellt ein besonders vorteilhaftes, kompakt in sich geschlossenes Bauteil dar. Auf Grund der homogenen Verbindung des endlosen Kunststoffstranges in den Kreuzungspunkten bildet die Mantelfläche der Druckfeder quasi ein Netz verkoppelter Federelemente mit geschlossenen Knoten. Diese Struktur kann ermüdungsfrei mit Druckkräften belastet werden, und ist somit als ein Ersatz vom Metallfedern z.B. im Inneren von Taschenfederkernmatratzen geeignet.

## Beschreibung

Druckfeder aus einem faserverstärkten Kunststoffstrang, insbesondere zur Verwendung in einer Taschenfederkernmatratze, mit Herstellungsverfahren

Die Erfindung betrifft eine Druckfeder, welche einen faserverstärkten Kunststoffstrang aufweist und besonders als Einlage in eine Taschenfederkernmatratze geeignet ist. Die Erfindung betrifft auch Verfahren zur Herstellung einer derartigen Druckfeder.

Aus der EP 1 285 607 ist bereits ein Matratzenkern aus Schaumstoff bekannt. Dieser weist quer zu seiner Längsachse verlaufende Hohlräume auf, in den Spiralfedern aus einem Bandmaterial liegend angeordnet sind. Vorzugsweise sind die Spiralfedern aus einem Bandmaterial und einem Faserverbundwerkstoff hergestellt und eingeschäumt.

Weiterhin sind aus der DE 102 28 406 ein spiralförmiges Strukturelement sowie Verbundbauteile bestehend aus derartigen spiralförmigen Strukturelementen und einem Außenbauteil bekannt. Das Strukturelement umfasst einen bandförmigen Körper aus einem Kunststoff mit Versteifungsfasern in einer spiralförmigen Anordnung. Derartige spiralförmige Körper können in Form eines oder mehrerer ineinander liegender Wickelschläuche bzw. in Form eines spiralförmig geschlitzten Rohres ausgebildet sein. Es ist vorgesehen, eine Vielzahl von derartigen spiralförmigen Körpern nebeneinander liegend anzuordnen und mit Deckschichten zu versehen. Hiermit können großflächige, kissenartig ausgepolsterte Elemente mit unterschiedlichen Geometrien gebildet werden.

Demgegenüber liegt der Erfindung die Aufgabe zu Grunde, eine Druckfeder und Verfahren zu deren Herstellung anzugeben, welche insbesondere in einer Taschenfederkernmatratze als Ersatz für herkömmliche metallische Druckfedern eingesetzt werden kann.

Die Aufgabe der Erfindung wird durch die im Anspruch 1 angegebene Druckfeder gelöst. Weitere vorteilhafte Ausführungsformen der erfindungsgemäßen Druckfeder und vorteilhafte Verfahren zur deren Herstellung sind in den Unteransprüchen angegeben.

Die erfindungsgemäße Druckfeder, deren Wickelgänge aus einem endlosen konditionierten faserverstärkten Kunststoffstrang bestehen, welcher in den Kreuzungspunkten der Wickelgänge homogen miteinander verbunden ist, stellt ein besonders vorteilhaftes, kompakt in sich geschlossenes Bauteil dar. Auf Grund der homogenen Verbindung des endlosen Kunststoffstranges in den Kreuzungspunkten bildet die Mantelfläche der Druckfeder quasi ein Netz verkoppelter Federelemente mit geschlossenen Knoten. Diese Struktur kann ermüdungsfrei mit Druckkräften belastet werden, und ist somit in hervorragender Weise als ein Ersatz vom Metallfedern z.B. im Inneren von Taschenfederkernmatratzen geeignet.

Die erfindungsgemäße Druckfeder ist besonders robust, wenn die Wickelgänge eine zentrale Achse aufweisen und die Kreuzungspunkte annähernd diametral versetzt sind, also relativ zu dieser Achse annähernd radial gegenüber liegen. Diese Ausführung ist durch eine annähernd gleichmäßige Verteilung der homogen verbundenen, geschlossenen Knoten des Kunststoffstranges auf der Mantelfläche der Druckfeder gekennzeichnet.

Vorteilhaft beschreiben die Wickelgänge des konditionierten, faserverstärkten Kunststoffstrangs eine annähernd zylindrische Mantelfläche. Andererseits können die Wickelgänge im Querschnitt auch anders geformt sein, z.B. quadratisch, wabenförmig oder oval.

Bei einer ersten vorteilhaften Ausführung ist der faserverstärkte Kunststoffstrang der erfindungsgemäßen Druckfeder durch ein endloses Hybridgarn gebildet, welches mittels Wärme- und/oder Druckeinwirkung konditioniert worden ist.

Bei einem Hybridgarn handelt es sich bekanntlich um einen zunächst biegeweichen Strang aus einer losen Fülle von endlosen technischen Fasern und Kunststofffasern. Dabei stellen die technischen Fasern, z.B. Glas-, Polyaramid-, Carbonfasern, die Zugfestigkeit des Fasergemischs bereit. Die technischen Fasern werden dann durch Konditionieren der beigemischten Kunststofffasern zum faserverstärkten Kunststoffstrang verbunden. Dieser weist nach Abschluss der Konditionierung eine deutliche Biegesteifigkeit auf, so dass die Wickelgänge der daraus geformten Druckfeder bei Belastung eine gute Federwirkung entfalten können.

Eine besondere Bedeutung kommt bei der vorliegenden Erfindung der Ausbildung der homogenen Verbindungen des faserverstärkten Kunststoffstrangs in den Kreuzungspunkten der Wickelgänge der Druckfeder zu.

Im Falle der Verwendung eines endlosen Hybridgarns als Ausgangsmaterial kann dieses vorteilhaft dadurch konditioniert werden, dass es vor, während oder nach der Ausbildung der Wickelgänge schmelzflüssige erwärmt wird. Bei diesem Vorgang schmelzen die Kunststofffasern auf. Während der schmelzflüssigen Phase des Kunststoffs kann sich der Strang in den Kreuzungspunkten der übereinander liegenden Wickelgänge besonders homogene verbinden. Nach Abkühlung und Aushärtung weist der Strang und dessen Kreuzungspunkte eine feste Matrixstruktur auf, in der die technischen Fasern eingebettet sind. Diese Knoten sind besonders belastbar. Wird der faserverstärkte Kunststoffstrang während der schmelzflüssigen Phase zumindest in den Kreuzungspunkten der Wickelgänge noch zusätzlich verpresst, so kann die Verbindung weiter verbessert werden.

Bei einer anderen Ausführung kann die Konditionierung des endloses Hybridgarns und damit die homogene Verbindung des faserverstärkten Kunststoffstrangs in den Kreuzungspunkten der Wickelgänge nach der Ausbildung der Wickelgänge auch durch eine kombinierte Wärme- und Druckbehandlung erfolgen.

Bei einer weiteren vorteilhaften Ausführung ist der faserverstärkte Kunststoffstrang der erfindungsgemäßen Druckfeder durch einen endlosen, vorkonditionierten Kunststoffstrang gebildet, welcher mittels Wärme- und/oder Druckeinwirkung erneut konditioniert worden ist.

Bei dem hier eingesetzten Ausgangsmaterial handelt es sich einen faserverstärkten Kunststoffstrang, welcher bereits in konditionierter Form vorliegt. Dieses kann dadurch hergestellt werden, dass ein Hybridgarn der oben beschriebenen Art in üblicher Weise vorkonditioniert worden ist. Der sich daraus ergebende, biegesteife und häufig stabförmig gestreckte Kunststoffstrang wird nun zur Herstellung der erfindungsgemäßen Druckfeder einer erneuten Konditionierung unterzogen. Die dabei erfolgende erneute schmelzflüssige Erwärmung des Strangs macht dann die Ausbildung der Wickelgänge der Druckfeder und vor allem eine homogene Verbindung der in den Kreuzungspunkten übereinander liegenden Wickelgänge möglich. Im Übrigen entsprechen die Verarbeitungsschritte der oben beschriebenen Verarbeitung von biegeweichem Hybridgarn als Ausgangsmaterial. Auch hier kann die Verbindung in den Kreuzungspunkten durch eine zusätzliche Verpressung während der schmelzflüssigen Phase weiter verbessert werden.

Weiterhin kann der faserverstärkte Kunststoffstrang der erfindungsgemäßen Druckfeder durch einen endlosen, imprägnierten Faserstrang gebildet werden, welcher mittels Wärme- und/oder Druckeinwirkung konditioniert worden ist.

Bei dem hier eingesetzten Ausgangsmaterial handelt es sich um einen biegeweichen Strang aus einer losen Fülle von endlosen technischen Fasern, welche mit einem flüssigen Harz, z.B. mit einem Duroplast, getränkt sind. Ein solches Material wird auch als PREPREG bezeichnet. Auch hierbei können die Konditionierung des Ausgangsmaterials und damit die Ausbildung der homogenen Verbindungen in den Kreuzungspunkten der Wickelgänge vorteilhaft durch eine kombinierte Wärme- und Druckbehandlung erfolgen. Hierdurch wird eine Aushärtung des flüssigen Harzes bewirkt.

Schließlich kann der faserverstärkte Kunststoffstrang der erfindungsgemäßen Druckfeder durch einen endlosen Faserstrang gebildet werden, welcher mit flüssigem Kunststoff konditioniert worden ist.

Bei diesem Ausgangsmaterial handelt es sich um einen biegeweichen Strang aus einer losen Fülle von endlosen technischen Fasern. Zur Herstellung einer erfindungsgemäßen Druckfeder und der homogenen Verbindung von deren faserverstärkten Kunststoffstrang in den Kreuzungspunkten der Wickelgänge wird dieser vor, während oder nach der Ausbildung der Wickelgänge durch Auf- oder Einbringung von flüssigem Kunststoff konditioniert. Ein solches Material wird auch als ROVING bezeichnet, welches z.B. durch Aufspritzen von flüssigem Kunststoff bevorzugt nach der Ausbildung der Wickelgänge oder durch Tränken mit flüssigem Kunststoff bevorzugt während oder nach der Ausbildung der Wickelgänge und einer darauf folgenden Aushärtungsphase konditioniert wird. Da diese Aushärtung ohne Wärme- und Druckeinwirkung erfolgt, ist eine zusätzliche Verpressung des faserverstärkten Kunststoffstrangs nach der Ausbildung der Wickelgänge zumindest in den Kreuzungspunkten der Wickelgänge auch hier von Vorteil.

Die Erfindung und weitere vorteilhafte Ausführungsformen derselben werden an Hand der kurz angeführten Figuren nachfolgend näher erläutert. Dabei zeigen
- Fig. 1: in einer Frontansicht eine gemäß der Erfindung aufgebaute beispielhaft zweigängige Druckfeder, wobei die Federbögen der über zwei Steigungen vor- und rücklaufenden Wickelgänge des faserverstärkten Kunststoffstrangs gesondert gekennzeichnet sind,
- Fig. 2: das Wickelschema der Druckfeder von Fig. 1, und
- Fig. 3: die Druckfeder von Fig. 1, wobei die über die Knoten in den Kreuzungspunkten verkoppelten Federelemente auf der Mantelfläche gesondert gekennzeichnet sind, und
- Fig. 4: die Druckfeder von Fig. 3 in einer um 90 Grad nach rechts gedrehten Frontansicht.

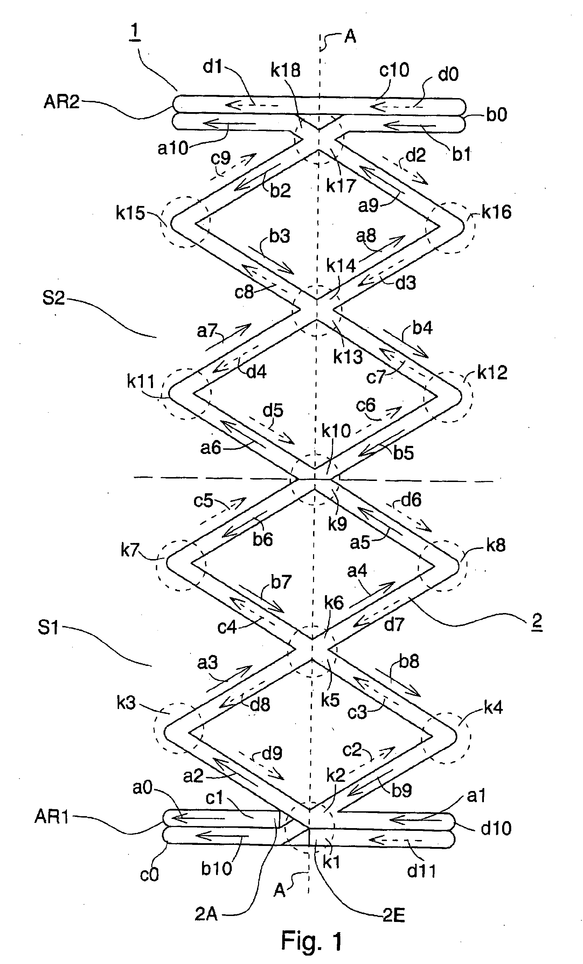

Fig. 1 zeigt in einer seitlichen Draufsicht einen endlosen, faserverstärkten Kunststoffstrang 2, der gemäß der Erfindung zu einer Druckfeder 1 gewickelt ist. Zum besseren Verständnis sind dabei die Wickelgänge des endlosen, faserverstärkten Kunststoffstrangs durch Pfeile in einzelne Federbögen aufgelöst. Die Richtungen der Pfeile zeigen zudem die dazugehörigen Wickelrichtungen an.

So erstreckt sich der endlose Kunststoffstrang 2, welcher die Druckfeder 1 bildet, im Beispiel der Fig. 1 über zwei Steigungen S1 und S2. Dabei stellt der Punkt 2A des Kunststoffstrangs 2 am unteren Fußende den Anfang des gesamten Wickels dar. Von diesem Punkt 2A ausgehend bilden die beiden Federbögen a0, a1 dabei zunächst eine Anfangswindung in einem unteren Auflagering AR1 und gehen dann in einen ersten, vorlaufenden Wickelgang über. Dieser ist aufwärts gerichtet und verläuft über die beiden Steigungen S1, S2 bis zum oberen Kopfende der Druckfeder. Der erste, vorlaufende Wickelgang weist dabei im Bereich der ersten Steigung S1 die Federbögen a2 - a5, im Bereich der zweiten Steigung die Federbögen a6 - a9 auf und geht am Kopfende in einen auslaufenden Federbogen a10 über. Dieser stellt einen Teil eines oberen Auflagerings AR2 dar.

Der endlose Kunststoffstrang 2 geht nun von den beiden Federbögen b0, b1, welche den Auflagering AR2 vervollständigen, in einen zweiten, rücklaufenden Wickelgang über. Dieser ist abwärts gerichtet und verläuft über die beiden Steigungen S2, S1 wieder bis zum unteren Fußende der Druckfeder. Der zweite, Rücklaufende Wickelgang weist dabei im Bereich der zweiten Steigung S2 die Federbögen b2 - b5, im Bereich der ersten Steigung die Federbögen b6 - b9 auf und geht am Fußende in einen auslaufenden Federbogen b10 über.

Der endlose faserverstärkte Kunststoffstrang 2 setzt sich nun im unteren Auflagering AR1 in die beiden Federbögen c0, c1 fort, welche eine Anfangshalbwindung bilden. Diese geht in einen dritten, vorlaufenden Wickelgang über, welche gegenüber dem ersten, vorlaufenden Wickelgang an der zentralen Achse A um 180 Grad verdreht ist. Dieser ist ebenfalls aufwärts gerichtet und verläuft über die beiden Steigungen S1, S2 bis zum oberen Kopfende der Druckfeder. Dieser dritte, vorlaufende Wickelgang weist dabei im Bereich der ersten Steigung S1 die Federbögen c2 - c5, im Bereich der zweiten Steigung die Federbögen c6 - c9 auf und geht am Kopfende in einen auslaufenden Federbogen c10 über. Dieser stellt wiederum einen Teil des oberen Auflagerings AR2 dar. Schließlich setzt sich der endlose faserverstärkte Kunststoffstrang 2 in die Federbögen d0, d1 fort, die eine letzte Anfangshalbwindung im oberen Auflagering AR2 bilden. Diese Federbögen d0, d1 gehen in einen letzten vierten, rücklaufenden Wickelgang über, welchen gegenüber den zweiten, rücklaufenden Wickelgang an der zentralen Achse A ebenfalls um 180 Grad verdreht ist. Dieser vierte Wickelgang ist ebenfalls abwärts gerichtet und verläuft über die beiden Steigungen S2, S1 wieder bis zum unteren Fußende der Druckfeder. Der vierte, rücklaufende Wickelgang weist dabei im Bereich der zweiten Steigung S2 die Federbögen d2 - d5, im Bereich der ersten Steigung die Federbögen d6 - d9 auf und geht am Fußende in die auslaufenden Federbögen d10, d11 über. Am Ende 2E des Federbogens d11 endet auch der faserverstärkte Kunststoffstrang 2 und damit der die Druckfeder 2 darstellende endlose Wickel.

Da die Fig. 1 eine seitliche Draufsicht auf die Druckfeder zeigt, werden die im hinteren Wickelbereich liegenden Federbögen durch die im vordern Wickelbereich liegenden Federbögen abgedeckt. In der Darstellung von Fig. 1 ist dies dadurch symbolisiert, dass vorn liegende, sichtbare Federbögen mit durchgehenden Pfeilen, und dahinter liegende, abgedeckte Federbögen mit strichlierten Pfeilen gekennzeichnet sind.

Dieser im Beispiel der Fig. 1 zweigängige, endlose Wickel aus dem faserverstärktem Kunststoffstrang 2, welcher sich zudem beispielhaft über zwei Steigungen S1, S2 erstreckt, weist eine Vielzahl von Kreuzungspunkten auf. Erfindungsgemäß ist der Kunststoffstrang in diesen Kreuzungspunkten - wie oben beschrieben - homogen verbunden, so dass sich feste Knotenpunkte bilden. Diese sind in Fig. 1 mit den Bezugszeichen k1 - k18 gekennzeichnet. Bei einer z.B. von oben auf den oberen Auflagering AR2 in Richtung der zentrale Achse A auf die Druckfeder einwirkende Druckkraft, wird die Feder durch entsprechende Verbiegungen der zwischen den Knotenpunkten k1 - k18 liegenden Federbögen a2 - a9, b2 - b9, c2 - c9 und d2 - d9 gestaucht. Die erfindungsgemäße, homogene Verbindung des konditionierten Kunststoffstrangs in den Knotenpunkten bewirkt dabei äußerst robuste, auch gegenüber starken Druckkräften unempfindliche Struktur der erfindungsgemäßen Druckfeder.

Gemäß einer besonders vorteilhaften Ausführung der Erfindung stellen die vorlaufenden und rücklaufenden Wickelgänge des Kunststoffstrangs 2 der Druckfeder eine mindestens zweigängige Spiralfeder mit mindestens zwei rechtsläufigen und zwei linksläufigen Steigungen dar. Eine solche Ausführung wurde bereits am Beispiel der Fig. 1 erläutert.

Weiterhin ist es vorteilhaft, wenn die Kreuzungspunkte der wicklegänge relativ zur Achse der Druckfeder annähernd diametral versetzt sind, bzw. sogar annähernd radial auf Quadranten verteilt sind. Auch derartige Ausführungen sind im Beispiel der Fig. 1 bereits dargestellt. So liegen auf der Mantelfläche der Druckfeder 1 z.B. die Knotenpaare k3, k4 bzw. k7, k8 bzw. k11, k12 bzw. k15, k16, und um 90 Grad dazu versetzt die Knotenpaare k1, k2 bzw. k5, k6 bzw. k9, k10 bzw. k13, k14 bzw. k17, k18 bezüglich der Achse A jeweils diametral zueinander. In einer Schnittdarstellung durch die Druckfeder von Fig. 1 würden somit die Knoten k3, k7, k11, k15, bzw. die Knoten k1, k5, k9, k13, k17, bzw. die Knoten k4, k8, k12, k16, bzw. die Knoten k2, k6, k10, k14, k18 jeweils in einem Quadranten liegen.

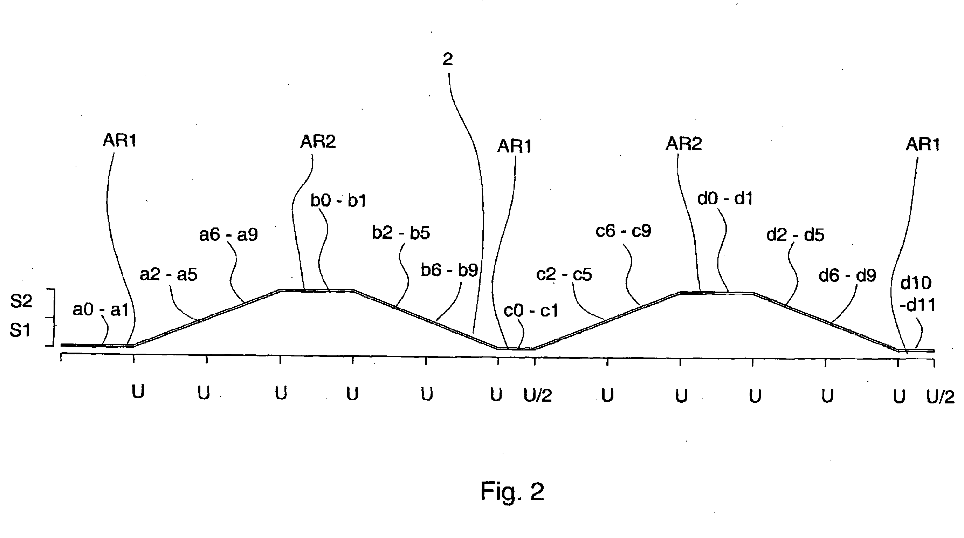

In Fig. 2 ist das zum Aufbau der Druckfeder 1 gehörige Wickelschema des faserverstärkten Kunststoffstrangs 2 dargestellt. Dabei sind auf der nach rechts verlaufenden x-Achse die einzelnen Umdrehungen der Wicklung und auf der nach oben verlaufenden γ-Achse die beiden Steigungen S1, S2 markiert. Bei den einzelnen Bereichen der Wicklung sind weiterhin die dazugehörigen Federbögen a2 - a5, a6 - a9, b2 - b5, b6 - b9, c2 - c5, c6 - c9, d2 - d5 und d6 - d9 zugeordnet. Schließlich sind auch diejenigen Federbögen a0 - a1, c0 - c1, welche zum unteren Auflagering AR1 gehören, und diejenigen Federbögen b0 - b1, d0 - d1, welche zum oberen Auflagering AR2 gehören, verzeichnet.

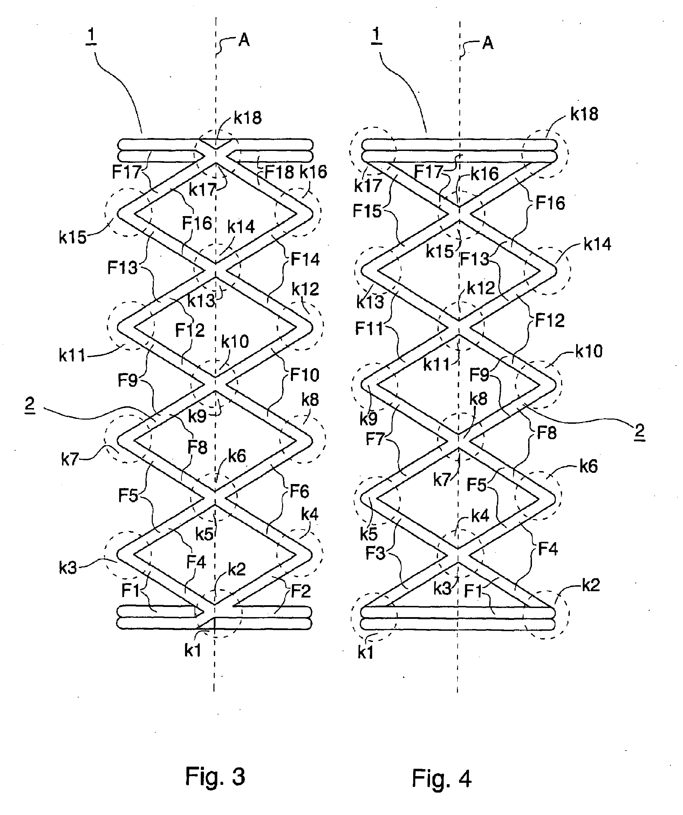

In der Fig. 3 ist die beispielhafte Druckfeder 1 von Fig. 1 nochmals dargestellt. Weiterhin sind ebenfalls die in Kreuzungspunkten befindlichen Knoten K1 bis k18 verzeichnet. Zusätzlich sind die durch die einzelnen Knoten und die angrenzenden Federbögen der Wickelgänge abgegrenzten Federelemente F1 bis F17 markiert. Der besondere Vorteil der erfindungsgemäßen Druckfeder 1 wird gerade darin gesehen, dass deren Mantelfläche quasi ein Netz aus den Federelementen F1 - F17, welche über die Knoten K1 - K18 miteinander gekoppelt sind, darstellt. So ist z.B. das Federelement F8 durch die Knoten k6, k7, k8, k10 und die zwischen Federbögen gebildet. Die Knoten k6, k7, k8, k10 bilden gleichzeitig die Verkopplungen zu den benachbarten Federelementen F4, F5, F6, F9, F10, F12 und F7.

Fig. 4 zeigt schließlich ebenfalls die Druckfeder 1, wobei die Ansicht gegenüber der Fig. 3 an der Achse A um 90 Grad nach rechts gedreht ist.

## Patentansprüche

1. Druckfeder, vorzugsweise für eine Taschenfederkernmatratze, **gekennzeichnet durch** federartige Wickelgänge aus einem endlosen konditionierten, faserverstärkten Kunststoffstrang (2), wobei der Kunststoffstrang in Kreuzungspunkten (k1-k18) der Wickelgänge (a2-a9; b2-b9; c2-c9; d2-d9) homogen verbunden ist.

2. Druckfeder nach Anspruch 1, **dadurch gekennzeichnet, dass** die Wickelgänge eine zentrale Achse (A) aufweisen und die Kreuzungspunkte (k1-k18) relativ zur Achse (A) annähernd diametral gegenüber liegend versetzt sind.

3. Druckfeder nach Anspruch 1 oder 2, **dadurch gekennzeichnet, dass** die Wickelgänge des konditionierten, faserverstärkten Kunststoffstrangs (2) eine annähernd zylindrische Mantelfläche beschreiben.

4. Druckfeder nach einem der vorangegangenen Ansprüche, **dadurch gekennzeichnet, dass** der konditionierte, faserverstärkte Kunststoffstrang (2) zumindest einen vorlaufenden ersten Wickelgang (a2-a5; c2-c5) und zumindest einen darüber liegenden, rücklaufenden zweiten Wickelgang (b6-b9; d2-d5) bildet, und der Kunststoffstrang (2) in den Kreuzungspunkten (k1-k18) der vor- und rücklaufenden Wickelgänge homogen verbunden ist.

5. Druckfeder nach Anspruch 4, **dadurch gekennzeichnet, dass** die vorlaufenden und rücklaufenden Wickelgänge (a2-a9; b2-b9; c2-c9; d2-d9) des Kunststoffstrangs (2) jeweils zwei Steigungen (S1, S2) aufweisen und die Kreuzungspunkte (k1-k18) radial annähernd auf Quadranten verteilt sind.

6. Druckfeder nach Anspruch 4 oder 5, **dadurch gekennzeichnet, dass** die vorlaufenden und rücklaufenden Wickelgänge (a2-a9; b2-b9; c2-c9; d2-d9) des Kunststoffstrangs (2) eine mindestens zweigängige Spiralfeder mit mindestens zwei rechtsläufigen und zwei linksläufigen Steigungen (S1, S2) bilden.

7. Druckfeder nach einem der vorangegangenen Ansprüche, **dadurch gekennzeichnet, dass** das Material des Kunststoffstrangs (2) am Anfang und/oder Ende zumindest eines UUickelganges einen gewickelten Auflagering (AR1,AR2) bildet.

8. Druckfeder nach einem der vorangegangenen Ansprüche, **dadurch gekennzeichnet, dass** der faserverstärkte Kunststoffstrang (2) durch ein mittels Wärme- und/oder Druckeinwirkung konditioniertes endloses Hybridgarn gebildet ist.

9. Druckfeder nach einem der Ansprüche 1. bis 7, **dadurch gekennzeichnet, dass** der faserverstärkte Kunststoffstrang (2) durch einen mittels erneuter Wärme- und/oder Druckeinwirkung konditionierten endlosen, vorkonditionierten Kunststoffstrang gebildet ist.

10. Druckfeder nach einem der Ansprüche 1 bis 7, **dadurch gekennzeichnet, dass** der faserverstärkte Kunststoffstrang (2) durch einen mittels Wärme- und/oder Druckeinwirkung konditionierten endlosen, imprägnierten Faserstrang gebildet ist.

11. Druckfeder nach einem der Ansprüche 1 bis 7, **dadurch gekennzeichnet, dass** der faserverstärkte Kunststoffstrang (2) durch einen mittels flüssigem Kunststoff konditionierten endlosen Faserstrang gebildet ist.

12. Verfahren zur Herstellung einer Druckfeder nach Anspruch 8, **dadurch gekennzeichnet, dass** zur homogenen Verbindung des faserverstärkten Kunststoffstrangs (2) in den Kreuzungspunkten der Wickelgänge ein endloses Hybridgarn vor, während oder nach der Ausbildung der Wickelgänge durch eine schmelzflüssige Erwärmung konditioniert wird.

13. Verfahren nach Anspruch 12, **dadurch gekennzeichnet, dass** der faserverstärkte Kunststoffstrang (2) während der schmelzflüssige Phase zumindest in den Kreuzungspunkten der Wickelgänge verpresst wird.

14. Verfahren zur Herstellung einer Druckfeder nach Anspruch 8, **dadurch gekennzeichnet, dass** zur homogenen Verbindung des faserverstärkten Kunststoffstrangs (2) in den Kreuzungspunkten der Wickelgänge ein endloses Hybridgarn nach der Ausbildung der Wickelgänge durch eine kombinierte Wärme- und Druckbehandlung konditioniert wird.

15. Verfahren zur Herstellung einer Druckfeder nach Anspruch 9, **dadurch gekennzeichnet, dass** zur homogenen Verbindung des faserverstärkten Kunststoffstrangs (2) in den Kreuzungspunkten der Wickelgänge ein endlosen, vorkonditionierter Kunststoffstrang vor der Ausbildung der Wickelgänge durch eine schmelzflüssige Erwärmung konditioniert wird.

16. Verfahren nach Anspruch 15, **dadurch gekennzeichnet, dass** der faserverstärkte Kunststoffstrang (2) während der schmelzflüssige Phase zumindest in den Kreuzungspunkten der Wickelgänge verpresst wird.

17. Verfahren zur Herstellung einer Druckfeder nach Anspruch 10, **dadurch gekennzeichnet, dass** zur homogenen Verbindung des faserverstärkten Kunststoffstrangs (2) in den Kreuzungspunkten der Wickelgänge ein endloser, imprägnierter Faserstrang nach der Ausbildung der Wickelgänge durch eine kombinierte Wärme- und Druckbehandlung konditioniert wird.

18. Verfahren zur Herstellung einer Druckfeder nach Anspruch 11, **dadurch gekennzeichnet, dass** zur homogenen Verbindung des faserverstärkten Kunststoffstrangs (2) in den Kreuzungspunkten der Wickelgänge ein endloser Faserstrang vor, während oder nach der Ausbildung der Wickelgänge durch Auf- oder Einbringung von flüssigem Kunststoff konditioniert wird.

19. Verfahren nach Anspruch 18, **dadurch gekennzeichnet, dass** der faserverstärkte Kunststoffstrang (2) nach der Ausbildung der Wickelgänge zumindest in den Kreuzungspunkten der Wickelgänge verpresst wird.
